# EUROPÄISCHE PATENTSCHRIFT

(11) **EP 2 913 208 B1**
(45) Veröffentlichungstag und Bekanntmachung des Hinweises auf die Patenterteilung: **20.03.2019**
(21) Anmeldenummer: 15156708.8
(22) Anmeldetag: 26.02.2015
(51) Int. Cl.: B60D 1/06, B60D 1/52, B60D 1/54, B60D 1/64

(54) **Anhängekupplung mit einer Fahrzeug-Kontakteinheit**
Tow bar with a vehicle contact unit
Attelage doté d'une unité de contact de véhicule

(30) Priorität: 01.03.2014 DE 102014003185
(43) Veröffentlichungstag der Anmeldung: 02.09.2015
(73) Patentinhaber: WESTFALIA - Automotive GmbH, 33378 Rheda-Wiedenbrück (DE)
(72) Erfinder: Domke, Friedrich, 33442 Herzebrock-Clarholz (DE)
(74) Vertreter: Patentanwälte Bregenzer und Reule Partnerschaftsgesellschaft mbB

(56) Entgegenhaltungen:
- EP-A1- 0 747 244
- EP-A1- 0 950 549
- EP-A1- 2 428 404
- EP-A2- 1 757 488
- WO-A1-2007/091222
- GB-A- 2 363 262

## Beschreibung

Die Erfindung betrifft eine Anhängekupplung für ein Kraftfahrzeug, mit einem Kupplungsarm zum Ankuppeln eines Anhängers oder eines Hecklastenträgers, gemäß dem Oberbegriff des Anspruchs 1.

Eine derartige Anhängekupplung ist beispielsweise in EP 0 747 244 A1 erläutert.

Ein Kupplungsarm einer Anhängekupplung wird zumindest in der Gebrauchsstellung üblicherweise anhand von Formschlusskonturen formschlüssig bezüglich der Fahrzeughalterung festgelegt und somit gesichert. Es ist ferner mittlerweile üblich, dass eine Steckdose am Kupplungsarm direkt angeordnet ist, so dass sie bei Gebrauch der Anhängekupplung bequem zugänglich ist. Derartige Ausführungsformen gibt es sowohl bei sogenannten Schwenksystemen, d.h. bei Anhängekupplungen, deren Kupplungsarm zwischen einer Gebrauchsstellung und einer Nichtgebrauchsstellung in der Regel schwenkbar, in manchen Fällen auch axial verschieblich gelagert ist. Aber auch bei so genannten Stecksystemen, d.h. beispielsweise gemäß EP 2 199 118 A1 oder DE 100 27 571 A1 ist es bekannt, die Steckdose, mithin also die Fahrzeug-Kontakteinheit, direkt am Kupplungsarm anzuordnen. Allerdings ist die Herstellung elektrischer Verbindungen vom Fahrzeug zu einer am Kupplungsarm angeordneten Steckdose relativ schwierig zu realisieren. Man benötigt beispielsweise hinreichend flexible Kabel (bei den genannten Schwenksystemen) oder komplizierte elektrische Steckkontakt-Systeme.

Es ist daher die Aufgabe der vorliegenden Erfindung, eine Anhängekupplung mit einer Fahrzeug-Kontakteinheit direkt am Kupplungsarm vorzuschlagen, die ein verbessertes Anschlusskonzept zur elektrischen Verbindung mit dem Bordnetz des Kraftfahrzeugs bereitstellt.

Zur Lösung der Aufgabe ist eine Anhängekupplung gemäß der technischen Lehre des Anspruchs 1 vorgesehen.

Bei der Fahrzeug-Kontakteinheit handelt es sich beispielsweise um eine Anhängersteckdose, insbesondere eine DIN-gerechte oder normgerechte Anhängersteckdose. Die Fahrzeug-Kontakteinheit ist beispielsweise entsprechend einer europäischen oder deutschen Norm ausgestaltet. Z.B. hat sie 7 Kontakte nach DIN 1724 oder 13 Kontakte nach ISO 11446, zur Herstellung einer elektrischen Verbindung mit der Anhänger-Kontakteinheit, also einem dazu passenden Anhängerstecker.

Es ist ein Grundgedanke der vorliegenden Erfindung, dass die Fahrzeug-Kontakteinheit in an sich bekannter Weise am Kupplungsarm angeordnet ist, die elektrische Kontaktierung aber abseits des Lagers, mit dem der Kupplungsarm zwischen der Gebrauchsstellung und der Nichtgebrauchsstellung beweglich gelagert ist, beispielsweise schwenkbar um eine Schwenkachse und/oder verschieblich um eine Stellachse (wobei die Stellachse gleichzeitig die Schwenkachse sein kann), vorgesehen ist. Auch die bei so genannten Stecksystemen übliche Steckverbindung zwischen Kupplungsarm und Fahrzeughalterung ist frei von elektrischen Kontaktelementen. Ein Vorteil ist, dass die Verbindungsmechanik zwischen Fahrzeughalterung und Kupplungsarm nicht durch die elektrischen Komponenten beeinträchtigt ist. Man braucht für die elektrische Verbindung zwischen Fahrzeughalterung und Kupplungsarm den Bauraum nicht vergrößern. Vielmehr findet die elektrische Kontaktierung außerhalb dieser Verbindungstechnik statt, nämlich an den Formschlusskonturen.

Das erfindungsgemäße Konzept eignet sich optimal für eine Nachrüstung, d.h. dass beispielsweise eine Anhängekupplung mit einer konventionellen neben der Fahrzeughalterung, z.B. am Querträger, angeordneten Steckdose umgerüstet werden kann auf eine Anhängekupplung mit Steckdose (Fahrzeug-Kontakteinheit) direkt am Kupplungsarm. Die elektrische Verbindungstechnik, nämlich die vorgenannten Kontaktelemente, können im Bereich der Formschlusskonturen sozusagen nachgerüstet werden. Auch eine Serienfertigung wird vereinfacht bzw. ein Gleichteilprinzip realisiert. Es ist beispielsweise möglich, einen Kupplungsarm für die Montage einer Fahrzeug-Kontakteinheit, mithin also einer Anhängersteckdose, sozusagen vorzurüsten, so dass der Kupplungsarm bei Bedarf bei einem erfindungsgemäßen System eingesetzt werden kann, bei dem die elektrische Kontaktierung in innovativer Weise im Bereich der Formschlusskonturen erfolgt.

Es ist mindestens ein Kontaktelement erforderlich, das elektrisch von den Grundkörpern der Fahrzeughalterung und des Kupplungsarms isoliert ist, während das andere Potenzial, beispielsweise ein Massepotenzial, auch durch den direkten Kontakt des Kupplungsarms mit der Fahrzeughalterung realisierbar ist. Mithin können also der Grundkörper der Fahrzeughalterung und des Kupplungsarms ein Kontaktelement darstellen, während das andere Kontaktelement elektrisch davon isoliert ist und beispielsweise ein Versorgungspotenzial für die Fahrzeug-Kontakteinheit überträgt.

Die Kontaktelemente sind vorzugsweise nicht im direkt kraftbeaufschlagt oder formschlüssig beaufschlagten Bereich der Formschlusskonturen. Eine vorteilhafte Ausführungsform der Erfindung sieht vor, dass die Kontaktelemente neben in der Gebrauchsstellung in Kontakt miteinander stehenden Formschlussflächen der Formschlusskonturen angeordnet sind, so dass die Kontaktelemente durch den Formschlusskontakt der Formschlusskonturen unbelastet sind. Dennoch sind im Bereich der Formschlusskonturen definierte Abstände zwischen einerseits dem Kupplungsarm und andererseits der Fahrzeughalterung vorhanden, so dass die Kontaktelemente optimal zueinander positioniert sind, wenn der Kupplungsarm die Gebrauchsstellung einnimmt.

Die Formschlusskonturen können an sich beliebige Gestalten haben. Es ist beispielsweise denkbar, dass die Formschlusskonturen wellenförmig sind, V-förmig oder dergleichen. Auch ineinander eingreifende Steckvorsprünge und Steckaufnahmen, beispielsweise in der Art von Bolzen und zylindrischen Steckaufnahmen oder dergleichen, können auf die erfindungsgemäße Weise mit einem oder mehreren Kontaktelementen versehen sein.

Eine bevorzugte Ausführungsform der Erfindung sieht vor, dass die Formschlusskonturen mindestens eine nutförmige Formschlussaufnahme und mindestens einen dazu passenden Formschlussvorsprung umfassen. Beispielsweise sind Formschlussaufnahme und Formschlussvorsprung V-förmig oder U-förmig. Aber auch eine in der Seitenansicht rechteckförmige Gestalt ist ohne weiteres möglich, das heißt dass beispielsweise der Formschlussvorsprungs bolzenartig ist, während die Formschlussaufnahme zylindrisch ist, beispielsweise auch ein Sackloch umfasst. Eine Paarung bestehend aus einem ersten und einen zweiten Kontaktelement der Anordnung von beispielsweise weiteren Kontaktelementen sind an einem Boden der mindestens einen Formschlussaufnahme und einem Scheitelbereich oder Frontalbereich, insbesondere an einer freien Stirnseite, des mindestens einen Formschlussvorsprungs einander gegenüberliegend angeordnet.

Wenn die Formschlusskonturen miteinander in Eingriff sind, ist der Scheitelbereich oder Stirnbereich des Formschlussvorsprungs dem Boden der Formschlussaufnahme gegenüberliegend, so dass die beiden zusammenwirkenden Kontaktelemente einen elektrischen Kontakt miteinander herstellen.

Ein jeweiliges Kontaktelement kann beispielsweise einen oder mehrere elektrische Kontaktflächen aufweisen. Die Kontaktflächen können beliebige Konturen haben, beispielsweise ringförmig sein, rechteckig oder kreisförmig oder dergleichen.

Es ist auch möglich, dass ein jeweiliges Kontaktelement mehrere, elektrisch voneinander isolierte Kontaktflächen aufweist, beispielsweise zwei oder drei Kontaktflächen.

Bevorzugt weist ein Kontaktelement einen elektrisch isolierenden Haltekörper, z.B. aus Kunststoff, und mindestens einen daran angeordneten elektrischen Kontakt auf, beispielsweise einem flächigen Kontakt oder einem punktförmigen Kontakt. Die jeweiligen Kontaktflächen können ungefedert sein oder in einer bevorzugten Ausführungsform angefedert. Beispielsweise ist es möglich, dass einer nicht angefederten, sich nicht in Richtung der gegenüberliegenden Kontaktflächen des anderen Kontaktelements sozusagen von selbst bewegenden Kontaktfläche eine federnde Kontaktfläche oder ein Federkontakt gegenüberliegt.

An dem Kupplungsarm oder der Fahrzeughalterung oder beiden ist beispielsweise eine Steckhalterung zum Anstecken mindestens eines der Kontaktelemente vorgesehen. Beispielsweise ist eine Steckaufnahme zum Einstecken des jeweiligen Kontaktelements vorgesehen. Die Steckaufnahme kann beispielsweise einen Aufnahmekanal aufweisen, in den das Kontaktelement sozusagen eingesteckt wird. Eine derartige Lösung ermöglicht in besonders einfacher Weise eine Nachrüstung oder überhaupt eine Montage des Kontaktelements an dem Kupplungsarm oder der Steckhalterung. Mithin ist also sozusagen schon ein Montageplatz für das jeweilige Kontaktelement am Kupplungsarm oder der Fahrzeughalterung vorgesehen. Durch eine zusätzliche Sicherungsmaßnahme, zum Beispiel eine Verschraubung, Verklebung oder dergleichen, ist es möglich, dass Kontaktelement an der Steckhalterung zu sichern.

An dem Kupplungsarm ist zweckmäßigerweise eine Kontakteinheit-Halterung zum Haltern der Fahrzeug-Kontakteinheit vorgesehen. Die Kontakteinheit-Halterung weist z.B. vor einen Armkörper des Kupplungsarms vorstehende Montagelaschen und/oder Montageösen oder dergleichen auf. Die Kontakteinheit-Halterung kann auch eine Steckaufnahme oder dergleichen zur Aufnahme der Fahrzeug-Kontakteinheit umfassen.

Weiterhin ist es zweckmäßig, wenn auch für die Leitungsführung schon vorbereitende Maßnahmen getroffen sind. So können beispielsweise am Kupplungsarm oder der Fahrzeughalterung oder beiden ein Leitungskanal zur Aufnahme mindestens eines Abschnitts der mindestens einen Anschlussleitung angeordnet sein. Bei dem Leitungskanal oder einem Abschnitt davon kann es sich beispielsweise um einen rohrförmigen, d.h. im Umfang geschlossenen, Leitungskanal handeln. Aber auch eine seitlich offene Leitungsführung, z.B. ein nutförmiger Kanal, ist bei dem Leitungskanal oder einem Abschnitt davon vorteilhaft.

Die Steckhalterung oder die Kontakteinheit-Halterung oder der Leitungskanal (oder beliebige Kombinationen davon) sind zweckmäßigerweise mit einem Grundkörper des Kupplungsarms oder der Fahrzeughalterung einstückig. Beispielsweise sind Ausfräsungen vorgesehen. Auch bei der Herstellung der Grundkörper des Kupplungsarms oder der Fahrzeughalterung als ein Schmiedeteil und/oder Gussteil können die vorgenannten Komponenten oder Ausgestaltungen sozusagen gleich mit dem jeweiligen Grund-Kupplungsarm oder der Grund-Fahrzeughalterung hergestellt werden.

Ein Grundkörper des Kupplungsarms und/oder der Fahrzeughalterung besteht vorzugsweise aus Metall, zum Beispiel Stahl, Eisen, Aluminium oder dergleichen.

Der Kontakteinheit-Abschnitt der mindestens einen Anschlussleitung verläuft zweckmäßigerweise an einem Außenumfang des Kupplungsarms. Es ist auch möglich, dass zwei oder weitere Kontaktelemente jeweils mit dem Kontakteinheit-Abschnitt verbunden sind, d.h. dass der Kontakteinheit-Abschnitt beispielsweise zu den Kontaktelementen verzweigt. Des Weiteren ist es möglich, dass die Anschlussleitung von einem ersten Kontaktelement zu einem zweiten Kontaktelement führt, beispielsweise mit weniger Adern oder einzelnen Strängen zwischen den Kontaktelementen als bis zu dem ersten Kontaktelement.

Bevorzugt ist eine Ausführungsform, bei der die Anhängekupplung zwei in einem Winkelabstand zueinander angeordnete Paarungen von Formschlusskonturen aufweist, an denen jeweils mindestens ein Paar zusammenwirkender Kontaktelemente vorgesehen sind. Selbstverständlich können mehrere derartige Paarungen von Kontaktelementen oder auch nur eine Paarung von Kontaktelementen vorgesehen sein. Der Abstand zwischen den Paarungen von Formschlusselementen beträgt beispielsweise 180°, 120° oder dergleichen. So könnte beispielsweise die Formschlusskonturen um die Steckaufnahme der Fahrzeughalterung herum und korrespondierend um den Steckvorsprung des Kupplungsarms herum angeordnet sein. Es ist möglich, dass alle Paarungen von Formschlusskonturen mit zugeordneten Paarungen von Kontaktelementen versehen sind. Es ist aber auch möglich, dass es Paarungen von Formschlusskonturen gibt, an denen keine zusammenwirkende Paarungen von Kontaktelementen vorgesehen sind.

An dieser Stelle sei bemerkt, dass selbstverständlich die Steckaufnahme zwar vorzugsweise bei der Fahrzeughalterung, der Steckvorsprung beim Kupplungsarm vorgesehen ist. Es kann aber auch umgekehrt die Fahrzeughalterung einen Steckvorsprung und der Kupplungsarm eine Steckaufnahme aufweisen.

Weiterhin ist es vorteilhaft, wenn ein Steuergerät zur Ansteuerung der Anschlusskontakte der Fahrzeug-Kontakteinheit vorgesehen ist. Das Steuergerät kann einen Bestandteil eines Systems bilden, dass auch die Anhängekupplung umfasst. Beispielsweise kann das Steuergerät ein Bestandteil eines Bausatzes sein, der neben dem Steuergerät auch die Fahrzeughalterung und dem Kupplungsarm sowie gegebenenfalls dazwischen angeordnete Verbindungselemente (Steckverbindung, Lager oder dergleichen) umfasst.

Die mindestens eine Anschlussleitung, die Kontaktelemente sowie die Fahrzeug-Kontakteinheit können beispielsweise Bestandteil eines Elektrosatzes sein. Der Elektrosatz kann bei der Herstellung der Anhängekupplung oder auch nachträglich, sozusagen zur Nachrüstung der Anhängekupplung, bereitgestellt werden.

Eine Ausführungsform der Erfindung sieht vor, dass das Steuergerät sozusagen fahrzeugseitig ist, d.h. dass es beispielsweise im Gepäckraum des Zugfahrzeugs oder Kraftfahrzeugs angeordnet ist, direkt bei der Fahrzeughalterung, z.B. an einem Querträger, oder dergleichen. In diesem Fall ist die Anschlussleitung mit ihrem Bordnetz-Abschnitt mit dem Steuergerät verbunden oder verbindbar. Eine andere Ausführungsform, die selbstverständlich mit der vorgenannten Ausführungsformen kompatibel und gegebenenfalls zusammen auch realisierbar ist, sieht vor, dass das Steuergerät einen Bestandteil der Fahrzeug-Kontakteinheit bildet. Es ist weiterhin möglich, dass das Steuergerät sozusagen gesplittet ist, d.h. dass eine Steuergerät-Komponente am oder im Kraftfahrzeug angeordnet ist, während die andere Steuergerät-Komponente einen Bestandteil der Fahrzeug-Kontakteinheit bildet.

Das in der Fahrzeug-Kontakteinheit oder daran angeordnete Steuergerät oder die Steuergerät-Komponente kann beispielsweise einen Buskoppler umfassen, so dass die diversen Anschlusskontakte der Fahrzeug-Kontakteinheit über beispielsweise eine serielle Verbindung, insbesondere eine Busverbindung, ansteuerbar sind. Es sind deutlich weniger elektrische Leitungen oder Adern bei der elektrischen Anschlussleitung, jedenfalls im Bereich des Kontakteinheit-Abschnitts, und/oder weniger elektrische Kontaktflächen bei den Kontaktelementen notwendig.

Die Erfindung sieht vor, dass die Fahrzeug-Kontakteinheit eine serielle Datenschnittstelle oder eine Busschnittstelle zur Kommunikation mit dem Bordnetz des Kraftfahrzeugs oder einem Steuergerät der Anhängekupplung über Datenleitungen oder Busleitungen umfasst, beispielsweise zwei Datenleitungen oder Busleitungen. Die Datenleitungen oder Busleitungen sind Bestandteile der mindestens einen Anschlussleitung. Beispielsweise sind in der Anschlussleitung zwei Adern für die Busleitungen oder Datenleitungen vorgesehen. Bei den Busleitungen oder dem Busprotokoll handelt es sich beispielsweise um einen CAN-Bus, einen I2C-Bus oder dergleichen.

Somit können beispielsweise elektrische Steuerbefehle oder Meldebefehle seriell auf ganz wenigen Leitungen, beispielsweise zwei oder drei Leitungen, übertragen werden, die dann vom Buskoppler und/oder einem mit diesem zusammenwirkenden Mikrokontroller sozusagen aufgesplittet werden, um die verschiedenen elektrischen Anschlusskontakte der Fahrzeug-Kontakteinheit individuell zu bedienen. So kann beispielsweise ein an einem Kontakt der Fahrzeug-Kontakteinheit erfasstes Meldesignal, zum Beispiel die Belegung des Kontaktes durch die Anhänger-Kontakteinheit, auf dem Bus übertragen oder gesendet werden oder ein Steuersignal vom Kraftfahrzeug her auf einen Anschlusskontakt der Fahrzeug-Kontakteinheit aufgeschaltet werden, beispielsweise um eine Leuchte des Anhängers anzusteuern oder dergleichen.

Bevorzugt ist eine Anordnung derart, dass die mindestens eine Anschlussleitung ein Paar elektrischer Versorgungsleitungen und ein Paar elektrischer Kommunikationsleitungen, beispielsweise die vorgenannten seriellen Datenleitungen oder Busleitungen, aufweist. Mithin ist also die gesamte elektrische Verbindung zwischen der Fahrzeughalterung und dem Kupplungsarm über insgesamt vier Leitungen realisiert. Es sind ebenso viele, nämlich vier, elektrische Kontakte zwischen Fahrzeughalterung und Kupplungsarm vorgesehen oder notwendig.

Eine andere Variante kann vorsehen, dass bei der mindestens einen Anschlussleitung nur elektrische Energieversorgungsleitungen vorgesehen sind, auf die dann Daten aufmoduliert werden. Anhand der aufmodulierten Daten kann beispielsweise ein an Bord der Fahrzeug-Kontakteinheit oder an einer sonstigen Stelle am Kupplungsarm angeordneter Demodulator Steuerdaten von der Versorgungsleitung demodulieren und somit die Anschlusskontakte der Fahrzeug-Kontakteinheit einziehen und individuell bedienen, beispielsweise um Leuchten des Anhängers anzusteuern. Auch umgekehrt funktioniert eine derartige Kommunikation, d.h. dass beispielsweise ein Modulator am Kupplungsarm Meldedaten, die von den Anschlusskontakten oder einer sonstigen Stelle der Fahrzeug-Kontakteinheit stammen, auf die Energieversorgungsleitungen aufmoduliert. Auf Seiten der Fahrzeughalterung sind dann ebenfalls zweckmäßigerweise ein Modulator und ein Demodulator vorgesehen, die eine Versorgungsleitungen (2 Adern reichen) angeschlossen sind. Dementsprechend haben die Kontaktelemente dann beispielsweise nur 2 Paare von miteinander in elektrischen Kontakt tretenden Kontaktflächen.

Es ist ferner möglich, dass für jedes elektrische Potenzial, das mit einem Anschlusskontakt der Fahrzeug-Kontakteinheit kommuniziert, jeweils eine Ader oder eine Teil-Leitung der mindestens einen elektrischen Anschlussleitung sowie ein Paar von Kontakten an einander zugeordneten Kontaktelementen vorgesehen ist.

Eine bevorzugte Ausführungsform der Erfindung sieht vor, dass die mindestens eine Anschlussleitung genau ein Paar elektrischer Versorgungsleitungen und genau ein Paar elektrischer Kommunikationsleitungen, zum Beispiel Busleitungen umfasst. Es sind also exakt vier Leitungen vorhanden.

Es versteht sich, dass eine gewisse Redundanz vorteilhaft ist, d.h. dass beispielsweise über voneinander verschiedene Kontaktelemente sowohl jeweils Daten als auch elektrische Energie übertragen werden kann. Wenn dann die elektrische Verbindung zwischen den Kontakten eines Paares von Kontaktelementen schlecht ist oder gar abreißt, ist immer noch die Verbindung über die andere Paarung von Kontaktelementen gegeben. Wenn zum Beispiel über einen Winkelabstand voneinander entfernte Paarungen von Kontaktelementen vorgesehen sind, ist es zweckmäßig, wenn über beide Paarungen jeweils elektrische Energie und Daten übertragen werden, d.h. dass beispielsweise jeweils vier elektrische Kontakte pro Paarung von Kontaktelementen vorgesehen sind.

Es ist vorteilhaft, wenn mindestens ein Kontaktelement einen federnden elektrischen Kontakt, zum Beispiel einen angefederten Kontaktstift, eine federnde Kontaktfahne oder dergleichen, aufweist. Bei den Kontakten handelt es sich vorzugsweise um Schleifkontakte oder Druckkontakte. Wenn beim Kontaktvorgang, wenn die Kontaktflächen der einander zugeordneten Kontaktelemente miteinander eine elektrische Verbindung herstellen, die Kontaktflächen aneinander zumindest über ein gewisses Wegestück entlang schleifen, hat das den Vorteil, dass eine eventuell vorhandene Oxidation durch den schleifenden Kontakt der beiden Kontaktflächen aneinander abgearbeitet oder abgeschliffen wird.

Es ist vorteilhaft, wenn eine Abdeckung mindestens eines an der Fahrzeughalterung angeordneten elektrischen Kontaktelements vorgesehen ist. Die Abdeckung umfasst beispielsweise einen Deckel, der zur Abdeckung der Steckaufnahme für den Kupplungsarm vorgesehen ist. Beispielsweise sind an der Abdeckung oder dem Deckel Formschluss-Abdeckelemente vorgesehen, die zu den Formschlusskonturen der Fahrzeughalterung genau passen, beispielsweise Vorsprünge, die in die entsprechende Formschluss-Aufnahme der Fahrzeughalterung hinein passen und dabei zugleich das an der Formschlussaufnahme vorgesehene Kontaktelement abdecken.

Eine weitere Abdeckungsmöglichkeit besteht auch darin, dass beispielsweise der durch das Lager zwischen der Gebrauchsstellung und der Nichtgebrauchsstellung verstellbare Kupplungsarm in der Nichtgebrauchsstellung gleichzeitig mindestens ein Kontaktelement abdeckt. Der Kupplungsarm bildet sozusagen eine Abdeckung für das jeweilige Kontaktelement.

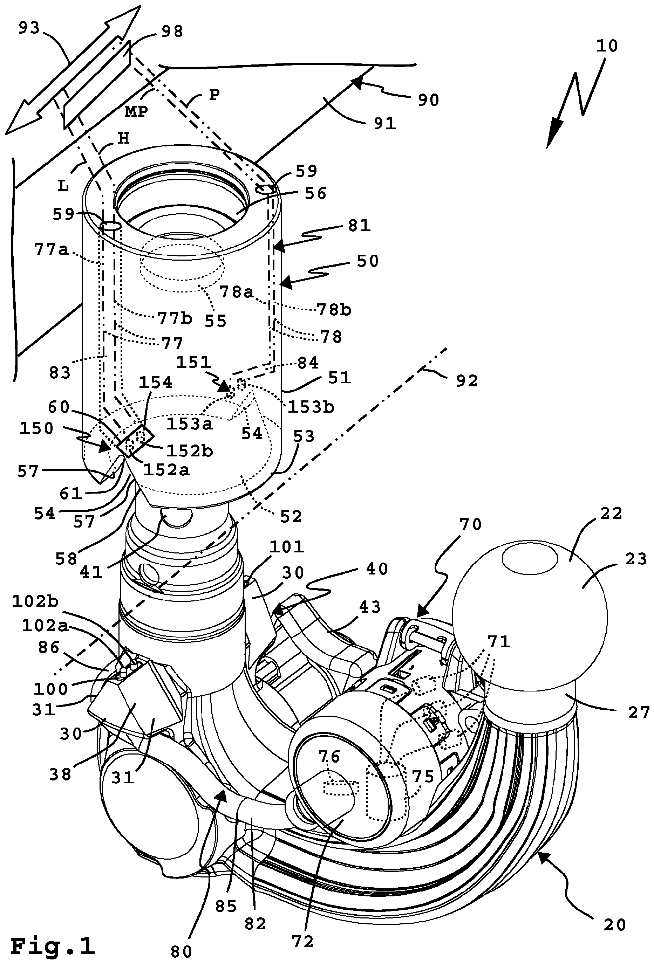

- Figur 1: eine perspektivische Schrägansicht von in Fahrtrichtung gesehen schräg hinten oben einer Anhängekupplung, deren Kupplungsarm teilweise in eine Fahrzeughalterung eingesteckt ist,

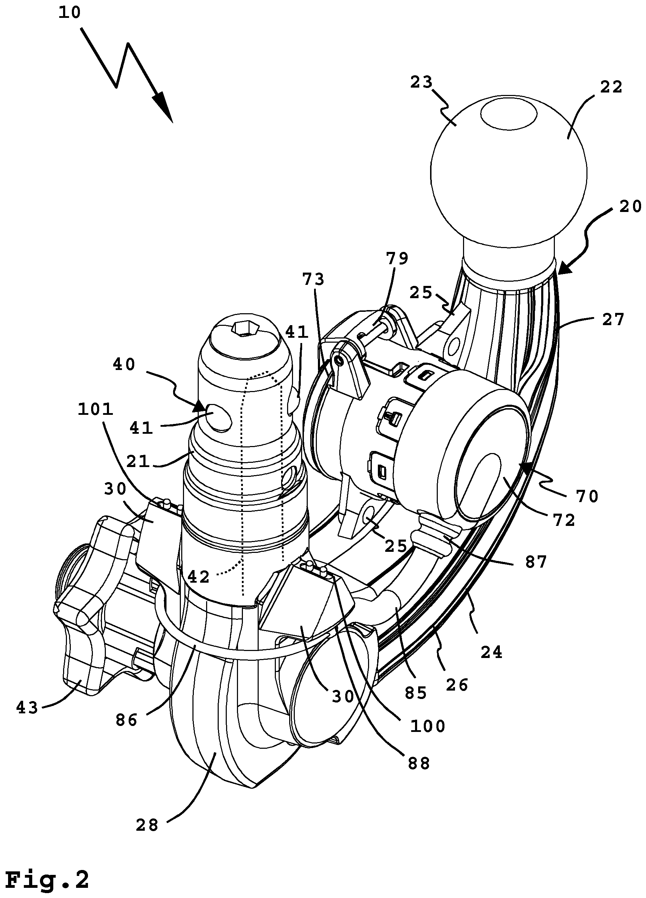

- Figur 2: den Kupplungsarm der Anhängekupplung gemäß Figur 1 von schräg vorn (in Fahrtrichtung nach hinten gesehen),
- Figur 3: eine Explosionsdarstellung des Kupplungsarms gemäß Figur 2 von schräg hinten oben sowie einer Fahrzeug-Kontakteinheit, und
- Figur 4: die Anhängekupplung gemäß der vorstehenden Figuren in der Perspektive gemäß Figur 3, wobei der Kupplungsarm vollständig in die Fahrzeughalterung eingesteckt ist und die Gebrauchsstellung einnimmt.

Eine in der Zeichnung dargestellte Anhängekupplung 10 umfasst einen Kupplungsarm 20, der an einer Fahrzeughalterung 50 lösbar befestigbar ist. Der Kupplungsarm 20 weist einen Steckvorsprung 21 auf, der in eine Steckaufnahme 52 der Fahrzeughalterung 50 einsteckbar ist. Die Fahrzeughalterung 50 umfasst ein Gehäuse, z.B. eine Hülse 51, das bzw. welche die Steckaufnahme 52 begrenzt. Der Kupplungsarm 20 ist entlang einer Steckachse S in die Steckaufnahme 52 einsteckbar bzw. aus dieser wieder entnehmbar.

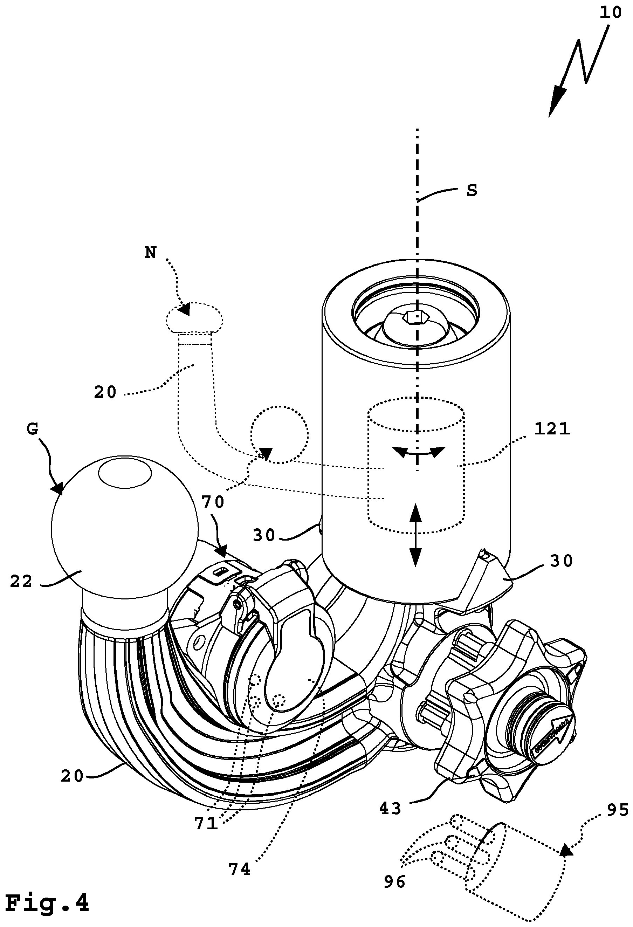

Man kann sich vorstellen, das alternativ auch eine Schwenk-Schiebelagerung anhand eines schematisch dargestellten Lagers 121 möglich wäre, d.h. dass beispielsweise der Kupplungsarm 20 um die Schwenkachse S schwenkbar und entlang dieser auch verschieblich bezüglich der Fahrzeughalterung 50 ist. Der Kupplungsarm 20 ist also beispielsweise zwischen einer in Figur 4 dargestellten Gebrauchsstellung G und einer Nichtgebrauchsstellung N verstellbar, so dass er bei Nichtgebrauch hinter einem Stoßfänger 92 eines Kraftfahrzeugs 90 verborgen ist, zumindest im Wesentlichen verborgen ist. Durch die Schwenk-Schiebebewegung taucht der Kupplungsarm 20 dann beispielsweise unter dem Stoßfänger 92 vor.

Die Fahrzeughalterung 50 ist beispielsweise an einem Querträger 91 befestigt, der sich hinten am Kraftfahrzeug 90, unterhalb eines Stoßfänger 92 des Kraftfahrzeugs 90, erstreckt. Der Querträger 91 sowie beispielsweise diesen an die Karosserie des Kraftfahrzeugs 90 anbindende (nicht dargestellte) Seitenträger sind Bestandteile einer vorzugsweise zur Anhängekupplung 10 gehörenden Trägerkonstruktion.

Am freien, vom Kraftfahrzeug 90 abgewandten Endbereich des Kupplungsarms 20 ist ein Kuppelkörper 22, zum Beispiel eine Kupplungskugel 23, angeordnet. Ein Armabschnitt 24 des Kupplungsarms 20 zwischen dem Steckende des Kupplungsarms 20, dem Steckvorsprung 21, und dem Kuppelkörper 22 ist beispielsweise in an sich bekannter Weise gekrümmt. An einem unteren Bereich 26 des Armabschnitts 24, der sich zwischen einem hoch stehenden Abschnitt 27, an dessen freiem Endbereich der Kuppelkörper 22 angeordnet ist, ist eine Kontakteinheit-Halterung 25 vorgesehen, die zum Halten einer Fahrzeug-Kontakteinheit 70 dient.

Die Fahrzeug-Kontakteinheit 70 ist beispielsweise entsprechend DIN 1724 mit 7 elektrischen Anschlusskontakten 71 oder nach ISO 11446 mit 13 elektrischen Anschlusskontakten 71 versehen, die schematisch angedeutet sind. Die ganz konkrete Ausgestaltung der Fahrzeug-Kontakteinheit 70 ist jedoch nicht auf diese beiden Normen eingeschränkt, d.h. es können auch andere Gestaltungen, auch proprietäre Ausgestaltungen, der Kontakteinheit 70 vorgesehen sein.

In die Fahrzeug-Kontakteinheit 70 ist eine Anhänger-Kontakteinheit 95 einsteckbar, die beispielsweise mehrere Kontaktstifte 96 oder andere Steckkontakte zum Einstecken in Steckaufnahmen der Fahrzeug-Kontakteinheit 70 aufweist, an denen die elektrischen Anschlusskontakte 71 vorgesehen sind.

Zwischen dem Steckvorsprung 21 und dem unteren Bereich 26 des Kupplungsarms 20 erstreckt sich noch ein Bogenabschnitt 28, von dem der Steckvorsprung 21 und der unteren Bereich 26 des Armabschnitts 24 etwa rechtwinkelig absteht. Auf die ganz konkrete Ausführungsform oder Winkelgestalt kommt es jedoch nicht an.

Der Kupplungsarm 20 ist an der Fahrzeughalterung 50 anhand einer Fixiereinrichtung 40 fixierbar und verriegelbar. Die Fixiereinrichtung 40 umfasst beispielsweise Formschlussvorsprünge 30, die in korrespondierende Formschlussaufnahmen 54 am unteren Rand 53 der Fahrzeughalterung 50 eingreifen, wenn der Kupplungsarm 20 in die Fahrzeughalterung 50 vollständig eingesteckt ist.

Mithin stellen die Formschlussvorsprünge 30 und die Formschlussaufnahmen 54 Formschlusskonturen 38, 58 dar.

Die Formschlussaufnahmen 54 weisen beispielsweise schräg zueinander verlaufende Formschlussflächen 57 auf, die mit ebenfalls schräg verlaufenden Formschlussflächen 31 der Formschlussvorsprünge 30 in formschlüssigen Kontakt stehen, wenn die Formschlussvorsprünge 30 in die Formschlussaufnahmen 54 eingreifen.

Die Formschlussvorsprünge 30 und die Formschlussaufnahmen 54 sind beispielsweise in einem Winkelabstand von 180° zueinander angeordnet.

Die Formschlussaufnahmen 54 sind in der Seitenansicht V-förmig, ebenso die dazu passenden Formschlussvorsprünge 30. Man kann die Formschlussflächen 31, 57 auch als Schrägflächen oder Keilflächen bezeichnen, die für einen festen Sitz des Kupplungsarms 20 an der Fahrzeughalterung 50 in der Gebrauchsstellung G sorgen.

Diese Keilflächen oder Schrägflächen werden durch eine axiale Kraft ineinander gezogen, die entlang der Steckachse S verläuft. Hierzu hat die Verriegelungseinrichtung Sperrelemente 41, z.B. Kugeln, die durch einen Betätigungskörper 42 nach radial außen aus dem Steckvorsprung 21 des Kupplungsarms 20 heraus betätigbar sind, so dass sie in eine Aufnahme 55, beispielsweise in der Art einer Kugelsitzrinne oder dergleichen, hineingedrückt werden. Durch entsprechende Schrägverläufe der Aufnahme 55 und der Sperrelemente 41 wird eine Kraft im Sinne eines Hineinziehens des Steckvorsprungs 21 in die Steckaufnahme 52 erzeugt, wodurch die Formschlussvorsprünge 30 keilartig in die Formschlussaufnahmen 54 eindringen. Dadurch ist eine Verdrehung des Kupplungsarms 20 um die Steckachse S verhindert. Das ist an sich bei Steck-Kupplungen dieser Art bekannt und lässt sich ohne weiteres auch im Zusammenhang mit dem Lager 121 realisieren, das heißt dass der Kupplungsarm 20 auch bei der Lagerung anhand des Lagers 121 durch die Fixiereinrichtung 40, jedenfalls die Formschlusskonturen 38, 58 an der Fahrzeughalterung 50 in der Gebrauchsstellung G sicher fixierbar ist.

Der Betätigungskörper 42, beispielsweise ein sogenannter Sperrbolzen, ist durch eine nicht dargestellte Feder in Richtung der Sperrstellung, in welcher die Sperrelemente 41 in die Aufnahme 55 gedrückt werden, belastet und kann anhand eines Handrads 43 oder eines sonstigen Betätigungsmechanismus', manuell oder motorisch in eine Lösestellung verstellt werden, in welcher die Sperrelemente 41 aus der Aufnahme 55 heraus und in den Steckvorsprung 21 bzw. dort angeordnete Kanäle hinein gelangen können.

Die vorgenannte Verriegelung und Fixierung ist also auch bei einem an der Fahrzeughalterung verschieblich und/oder schwenkbar gelagerten Kupplungsarm möglich.

Die Hülse 51 der Fahrzeughalterung 50 ist oben offen (Öffnung 56), könnte aber auch ohne weiteres geschlossen sein. Die nachfolgend erläuterte elektrische Verbindung zwischen einerseits der Fahrzeughalterung 50 und andererseits dem Kupplungsarm 20 und die weitere Verbindung mit einem Bordnetz 93 des Kraftfahrzeugs 90 sind dennoch möglich.

Die elektrischen Komponenten sind nämlich im Wesentlichen außenseitig am Kupplungsarm 20 und, soweit möglich, auch außenseitig an der Fahrzeughalterung 50 vorgesehen, was sogar eine nachträgliche Montage der Elektrik der Anhängekupplung 10 ohne weiteres möglich macht.

Die Fahrzeug-Kontakteinheit 70 weist beispielsweise ein Gehäuse 72 auf, das durch einen Deckel 73 verschließbar ist. Der Deckel 73 ist beispielsweise anhand eines Schwenklagers 79 schwenkbar am Gehäuse 72 gelagert. Hinter dem Deckel 73, der eine Steckaufnahme 74 der Fahrzeug-Kontakteinheit 70 verdeckt (was in der Zeichnung dargestellt ist), sind die Anschlusskontakte 71, beispielsweise 7 oder 13 Anschlusskontakte 71, angeordnet. Die Anschlusskontakte 71 werden von einem Steuergerät 75 angesteuert, das in der Fahrzeug-Kontakteinheit 70 integriert ist. Das Steuergerät 75 weist beispielsweise einen Buskontroller 76 auf, der über elektrische Busleitungen 77 ansteuerbar ist bzw. über elektrische Busleitungen 77 kommuniziert. Der Buskontroller 76 bildet eine Busschnittstelle und zugleich auch eine serielle Schnittstelle der Fahrzeug-Kontakteinheit 70.

Beispielsweise handelt es sich bei dem Bus, den der Buskontroller 76 bedient, um einen CAN-Bus oder dergleichen.

Die Busleitungen 77a, 77b sind also beispielsweise CAN-Low (L) und CAN-High (H) Leitungen (CAN = Controller-Area-Network).

Es muss sich aber bei dem durch den Buskontroller 76 bedienten Bus nicht zwingend um einen Bus handeln, der bei Kraftfahrzeugen üblich ist, z.B. um einen CAN oder Flexray-Bus. Es kann auch ein proprietärer Bus vorgesehen sein, beispielsweise zur Kommunikation mit dem später noch beschriebenen Steuergerät 98, das an Bord des Kraftfahrzeugs 90 angeordnet ist.

Weiterhin ist das Steuergerät 75 an zwei elektrische Versorgungsleitungen 78 angeschlossen, die die Fahrzeug-Kontakteinheit 70 mit elektrischer Energie versorgen. Eine Versorgungsleitung 78a weist beispielsweise ein Massepotenzial MP auf, die andere Versorgungsleitung 78b ein Versorgungspotenzial P, z.B. 12 Volt.

Die Leitungen 77, 78 bilden Adern oder Einzelleitungen einer Anschlussleitung 80, die einen mit dem Bordnetz 93 verbundenen Bordnetz-Abschnitt 81 und einen mit der Fahrzeug-Kontakteinheit 70 verbundenen Kontakteinheit-Abschnitt 82 umfasst.

Die Abschnitte 81, 82 weisen jeweils die erwähnten Einzelleitungen oder Adern auf, nämlich die Leitungen 77a, 77b, 78a, 78b,die jedoch nur im Bereich des Bordnetz-Abschnittes 81 einzeln gezeichnet sind.

Der Bordnetz-Abschnitt 82 umfasst Stränge oder Teil-Leitungen 83, 84, die die Leitungen 77a, 77b bzw. 78a, 78b umfassen. Die Leitungen 83, 84 sind in Leitungskanälen 59 der Fahrzeughalterung 50 zu dem Bordnetz 93 oder dem Steuergerät 98, das sozusagen direkt in die Fahrzeugelektrik des Kraftfahrzeugs 90 eingebunden ist, geführt. Die Leitungen 83, 84 könnten auch frei geführte Leitungen sein oder in nutförmigen Vertiefungen, beispielsweise am Außenumfang, der Fahrzeughalterung 50 aufgenommen sein.

Es sind beide Varianten möglich, nämlich dass die Leitungen 83, 84 zunächst zum Steuergerät 98 führen, das dann eine weitere Signalverarbeitung durchführt und mit dem Bordnetz 93 verbunden ist. Aber auch eine direkte Verbindung der Busleitungen 77 und der Versorgungsleitungen 78 mit dem Bordnetz 93 ist möglich. Wenn die Funktionen, beispielsweise Überwachung, Steuerung und dergleichen, des Steuergeräts 98 nicht notwendig sind, ist die letztgenannte Variante ohne weiteres realisierbar.

Die beiden Abschnitte 81, 82 sind durch Kontaktelemente 100, 101 und 150, 151 elektrisch miteinander lösbar verbindbar. Die Kontaktelemente 100, 101 sind dabei mit dem Kontakteinheit-Abschnitt 82 verbunden und befinden sich an den Formschlusskonturen 38 des Kupplungsarms 20. Den Kontaktelementen 100, 101 sind die anderen Kontaktelemente 150, 151 zugeordnet, die ihrerseits wiederum an der Fahrzeughalterung 50, nämlich im Bereich der Formschlusskonturen 58 angeordnet sind.

Das Kontaktelement 100 weist zwei Kontakte 102, nämlich einen mit der Busleitung 77a verbundenen Kontakt 102a und einen mit der Busleitung 77b verbundenen Kontakt 102b, auf. Das Kontaktelement 101 hat Kontakte 103a und 103b, die mit den Versorgungsleitungen 78a und 78b verbunden sind.

Die Kontaktelemente 150, 151 haben ebenfalls jeweils 2 Kontakte, nämlich Kontakte 152a, 152b für die Busleitungen 77a und 77b sowie Kontakte 153a, 153b für die Versorgungsleitungen 78a und 78b.

Die Kontaktelemente 100, 101 weisen beispielsweise ein Gehäuse oder einen Haltekörper 104 auf, an dem die jeweiligen Kontakte 102 und 103 angeordnet sind. Die Haltekörper 104 sind beispielsweise aus Kunststoff oder einem sonstigen elektrisch isolierenden Material.

Die Kontakte 102, 103 sind vorzugsweise angefedert. Beispielsweise sind die Kontakte 102, 103 durch federnde Stifte oder Pins gebildet. Die Federn sind zweckmäßigerweise im Innern der Haltekörpern 104 angeordnet. Es ist auch möglich, dass die Kontakte 102, 103 z.B. als federnde Kontaktfahnen ausgestaltet sind.

Die Kontakte 102, 103 bestehen beispielsweise aus Metall, insbesondere aus einem Edelmetall, das geringere Oxidationstendenzen hat.

Die Kontaktelemente 150, 151 können beispielsweise an Haltekörpern 154 vorgesehen sein, für die Aufnahmen 60, zum Beispiel Steckaufnahmen oder dergleichen, an der Fahrzeughalterung 50 vorgesehen sind. Die Kontakte 152a, 152b sowie Kontakte 153a, 153b können beispielsweise Metallflächen sein, die direkt und ungefedert an den Haltekörpern 154 vorgesehen sind. Es ist aber auch denkbar, dass beispielsweise die Fahrzeughalterung 50 im Bereich der Kontakte 152a, 152b sowie Kontakte 153a, 153b elektrisch isolierend ist, jedenfalls dass die Kontakte direkt an der Fahrzeughalterung 50 vorgesehen sind.

Es ist auch möglich, dass die Kontakte 152a, 152b und/oder die Kontakte 153a, 153b oder auch die Kontakte 102, 103 mit einer elektrischen Isolation versehen sind, so dass sie bei Kontakt mit dem Material oder Grundkörper der Fahrzeughalterung 50 oder des Kupplungsarms 20 keine elektrische Leitung herstellen, diesem Grundkörper gegenüber also isoliert sind. Beispielsweise sind rückseitig, d.h. im Kontaktbereich mit der Hülse 51, an den Kontakten 152a, 152b und/oder den Kontakten 153a, 153b Isolationen möglich. Selbstverständlich könnten die Kontakte 102, 103 auch integral am Kupplungsarm 20 bzw. dessen Grundkörper vorgesehen sein, die dann ihrerseits eine gewisse Isolation dem Grundkörper gegenüber aufweisen.

Von der Fahrzeug-Kontakteinheit 70 führt ein Strang 85 zu dem Kontaktelement 100, wo dann die beiden Busleitungen 77 sozusagen ausgeschleift werden. Der Strang 85 enthält die Busleitungen 77 und die Versorgungsleitungen 78. Im Bereich der Fahrzeug-Kontakteinheit 70 ist vorzugsweise eine Tülle 87 vorgesehen, das heißt dass die Anschlussleitung 80 seitlich und durch eine Tülle 87 geschützt aus dem Gehäuse 72 heraus geführt ist. Die Leitungen 77, 78 sind zweckmäßigerweise ummantelt, d.h. beispielsweise durch ein flexibles Schlauchmantelmaterial geschützt.

Im Bereich des Kontaktelements 100 verzweigt die Anschlussleitung 80 an einer Verzweigung 88, wobei in dem dadurch gebildeten Strang 86 die beiden Versorgungsleitungen 78 weiter zu dem Kontaktelement 100 geführt sind.

Die Stränge 85, 86 sind vorzugsweise spritzwassergeschützt. Es ist vorteilhaft, wenn die Anschlussleitung 80 integral in das jeweilige Kontaktelement 100, 101 hinein geführt ist, beispielsweise dort anhand einer Verschweißung, einer Tülle oder dergleichen, vor Wasser und anderen Umwelteinflüssen geschützt ist.

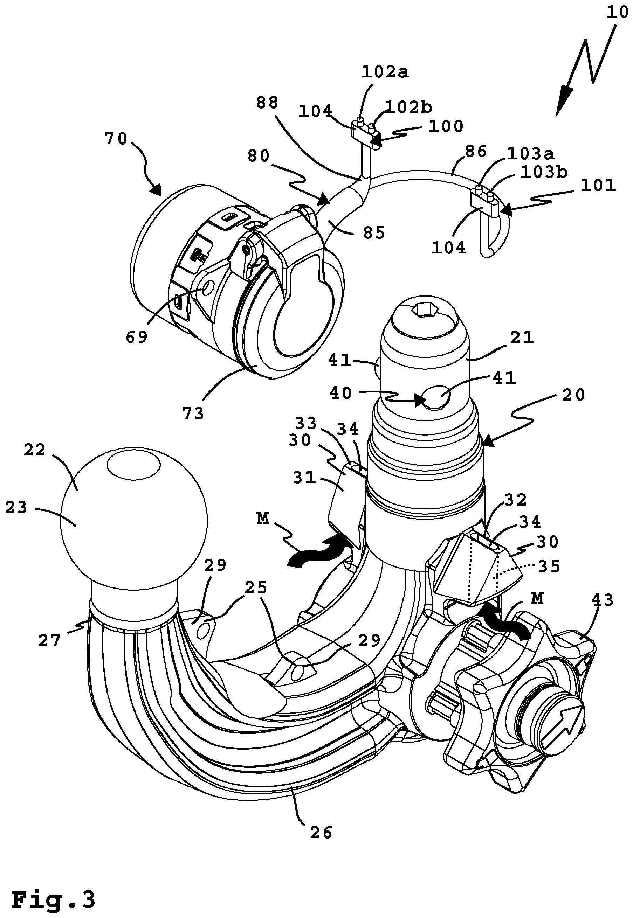

Die Kontaktelemente 100, 101 sind beispielsweise in Steckhalterungen 34 der Formschlussvorsprünge 30 aufgenommen. Die Steckhalterungen 34 sind beispielsweise die Endbereiche von Kanälen 35, die sich z.B. parallel zur Steckachse S, in den Formschlussvorsprüngen 30 erstrecken. Durch die Kanäle 35 hindurch können die Stränge 85, 86, jedenfalls die darin enthaltenen elektrischen Leitungen, des Kontakteinheit-Abschnitts 82 hindurch geführt werden. Die Kontaktelemente 101, 100 können in den Steckhalterungen 34 beispielsweise zusätzlich angeklebt werden, verrastet oder dergleichen anderweitig stoffschlüssig und/oder formschlüssig gesichert sein. Eine Steckmontage der Kontaktelemente 100, 101 in den Steckhalterungen 34 ist beispielsweise durch Pfeile M in Figur 3 angedeutet.

Auch die Fahrzeug-Kontakteinheit 70 ist ohne weiteres an dem Grundkörper des Kupplungsarms 20, auch nachträglich, montierbar. Beispielsweise umfasst die Kontakteinheit-Halterung 25 zwei Aufnahmeösen oder Schraubösen 29, die von (nicht dargestellten) Schrauben durchdrungen werden können, die ferner Schraubösen 69 der Fahrzeug-Kontakteinheit 70 durchdringen.

Die Kontaktelemente 100, 101 sind an Scheitelbereichen 33 der Formschlussvorsprünge 30 angeordnet. Eine Scheitelfläche 32 zwischen den schräg verlaufenden Formschlussflächen 31 ist nicht in direktem Kontakt mit einem Boden 61 der Formschlussaufnahmen 54, wo die gegenüberliegenden Kontaktelemente 150, 151 angeordnet sind. Der Boden 61 und die Scheitelfläche 32 sind also nicht durch den Formschlusskontakt der Formschlusskonturen 58, 38 direkt belastet.

## Patentansprüche

1. Anhängekupplung für ein Kraftfahrzeug (90), mit einem Kupplungsarm (20) zum Ankuppeln eines Anhängers oder eines Hecklastenträgers, der in einer Gebrauchsstellung (G) nach hinten vor das Kraftfahrzeug (90) vorsteht, wobei der Kupplungsarm (20) an einer an dem Kraftfahrzeug (90) befestigbaren oder befestigten Fahrzeughalterung (50) anhand einer einen Steckvorsprung (21) und eine Steckaufnahme (52) aufweisenden Steckverbindung lösbar befestigbar oder anhand eines Lagers (121) zwischen der Gebrauchsstellung (G) und einer zum Kraftfahrzeug (90) näher hin verstellten Nichtgebrauchsstellung (N) gelagert ist, wobei die Anhängekupplung (10) eine Fixiereinrichtung (40) zum Fixieren des Kupplungsarms (20) an der Fahrzeughalterung (50) aufweist, bei der an der Fahrzeughalterung (50) und dem Kupplungsarm (20) neben dem Steckvorsprung (21) und der Steckaufnahme (52) oder neben dem Lager (121) angeordnete Formschlusskonturen (38, 58) formschlüssig ineinander eingreifen, wobei an dem Kupplungsarm (20) eine elektrische Fahrzeug-Kontakteinheit (70) mit elektrischen Anschlusskontakten (71) zum elektrischen Anschluss einer elektrischen Anhänger-Kontakteinheit (95) des Anhängers angeordnet ist, die mindestens eine elektrische Anschlussleitung (80) zum Anschluss an ein Bordnetz (93) des Kraftfahrzeugs (90) aufweist, wobei an den Formschlusskonturen (38, 58) elektrische Kontaktelemente (100, 101, 150, 151) angeordnet sind, die in der Gebrauchsstellung (G) des Kupplungsarms (20) in elektrischem Kontakt miteinander sind und einen zur Verbindung mit dem Bordnetz (93) vorgesehenen Bordnetz-Abschnitt (81) und einen mit der Fahrzeug-Kontakteinheit (70) verbundenen Kontakteinheit-Abschnitt (82) der mindestens einen elektrischen Anschlussleitung (80) miteinander verbinden, **dadurch gekennzeichnet, dass** die Fahrzeug-Kontakteinheit (70) eine serielle Datenschnittstelle oder eine Busschnittstelle zur Kommunikation mit dem Bordnetz (93) des Kraftfahrzeugs (90) oder einem Steuergerät der Anhängekupplung (10) über Datenleitungen oder Busleitungen (77) umfasst, wobei die Datenleitungen oder Busleitungen (77) Bestandteile der mindestens einen Anschlussleitung (80) sind.

2. Anhängekupplung nach Anspruch 1, **dadurch gekennzeichnet, dass** die Kontaktelemente (100, 101, 150, 151) neben in der Gebrauchsstellung (G) in Kontakt miteinander stehenden Formschlussflächen (31, 57) der Formschlusskonturen (38, 58) angeordnet sind, so dass die Kontaktelemente (100, 101, 150, 151) durch den Formschlusskontakt der Formschlusskonturen (38, 58) unbelastet sind.

3. Anhängekupplung nach Anspruch 1 oder 2, **dadurch gekennzeichnet, dass** die Formschlusskonturen (38, 58) mindestens eine nutförmige, insbesondere V-förmige oder U-förmige, Formschlussaufnahme (54) und mindestens einen dazu passenden Formschlussvorsprung (30) umfassen, wobei miteinander zusammenwirkende Kontaktelemente (100, 101, 150, 151) der elektrischen Kontaktelemente (100, 101, 150, 151) an einem Boden (61) der mindestens einen Formschlussaufnahme (54) und einem Scheitelbereich (33) oder Frontalbereich des mindestens einen Formschlussvorsprungs (30) einander gegenüberliegend angeordnet sind.

4. Anhängekupplung nach einem der vorhergehenden Ansprüche, **dadurch gekennzeichnet, dass** an dem Kupplungsarm (20) und/oder der Fahrzeughalterung (50) eine Steckhalterung zum Anstecken mindestens eines der Kontaktelemente (100, 101, 150, 151) und/oder eine Kontakteinheit-Halterung (25) zum Haltern der Fahrzeug-Kontakteinheit (70) und/oder ein Leitungskanal (59) zur Aufnahme mindestens eines Abschnitts der mindestens einen Anschlussleitung (80) angeordnet ist.

5. Anhängekupplung nach Anspruch 4, **dadurch gekennzeichnet, dass** die Steckhalterung und/oder die Kontakteinheit-Halterung (25) und/oder der Leitungskanal (59) einstückig mit einem Grundkörper des Kupplungsarms (20) oder der Fahrzeughalterung (50) sind, wobei der Grundkörper vorzugsweise aus Metall besteht.

6. Anhängekupplung nach einem der vorhergehenden Ansprüche, **dadurch gekennzeichnet, dass** der Kontakteinheit-Abschnitt (82) der mindestens einen Anschlussleitung (80) an einem Außenumfang des Kupplungsarms (20) verläuft.

7. Anhängekupplung nach einem der vorhergehenden Ansprüche, **dadurch gekennzeichnet, dass** sie mindestens zwei oder exakt zwei in einem Winkelabstand, insbesondere von 180°, zueinander angeordnete Paarungen von Formschlusskonturen (38, 58) aufweist, an denen jeweils mindestens ein Paar zusammenwirkender Kontaktelemente (100, 101, 150, 151) vorgesehen sind.

8. Anhängekupplung nach einem der vorhergehenden Ansprüche, **dadurch gekennzeichnet, dass** ein Steuergerät (75) zur Ansteuerung der Anschlusskontakte (71) der Fahrzeug-Kontakteinheit (70) vorgesehen ist, wobei das Steuergerät (75) mit dem Bordnetz-Abschnitt (81) der mindestens einen Anschlussleitung (80) verbunden oder verbindbar ist oder einen Bestandteil der Fahrzeug-Kontakteinheit (70) bildet.

9. Anhängekupplung nach einem der vorhergehenden Ansprüche, **dadurch gekennzeichnet, dass** die serielle Datenschnittstelle oder die Busschnittstelle zur Kommunikation mit dem Bordnetz (93) des Kraftfahrzeugs (90) oder dem Steuergerät der Anhängekupplung (10) über zwei Datenleitungen oder Busleitungen (77) vorgesehen ist, wobei die Datenleitungen oder Busleitungen (77) Bestandteile der mindestens einen Anschlussleitung (80) sind.

10. Anhängekupplung nach einem der vorhergehenden Ansprüche, **dadurch gekennzeichnet, dass** die mindestens eine Anschlussleitung (80) ein Paar elektrischer Versorgungsleitungen (78) und ein Paar elektrischer Kommunikationsleitungen, insbesondere Busleitungen (77), umfasst.

11. Anhängekupplung nach einem der vorhergehenden Ansprüche, **dadurch gekennzeichnet, dass** die mindestens eine Anschlussleitung (80) ausschließlich ein Paar elektrischer Versorgungsleitungen (78) und ein Paar elektrische Kommunikationsleitungen umfasst und/oder die Anzahl elektrisch voneinander isolierter und mit dem Kontakteinheit-Abschnitt (82) der mindestens einen Anschlussleitung (80) verbundenen Kontaktflächen insgesamt 2 oder 4 ist.

12. Anhängekupplung nach einem der vorhergehenden Ansprüche, **dadurch gekennzeichnet, dass** mindestens ein Kontaktelement (100, 101, 150, 151) einen federnden elektrischen Kontakt (102, 103, 152, 154), insbesondere einen Kontaktstift, aufweist und/oder dass mindestens ein Kontaktelement (100, 101, 150, 151) mindestens einen an einem elektrisch isolierenden Haltekörper (104, 154) angeordneten elektrischen Kontakt (102, 103, 152, 154) aufweist.

13. Anhängekupplung nach einem der vorhergehenden Ansprüche, **dadurch gekennzeichnet, dass** sie zur redundanten Übertragung elektrischer Energie und/oder Daten, insbesondere Steuerdaten oder Meldedaten, redundant über voneinander separate Paarungen von Kontaktelementen (100, 101, 150, 151), insbesondere örtlich voneinander entfernten Paarungen von Kontaktelementen (100, 101, 150, 151), ausgestaltet ist.

14. Anhängekupplung nach einem der vorhergehenden Ansprüche, **dadurch gekennzeichnet, dass** sie eine Abdeckung mindestens eines an der Fahrzeughalterung (50) angeordneten elektrischen Kontaktelements (100, 101, 150, 151) aufweist, wobei die Abdeckung insbesondere einen die Steckaufnahme (52) für den Kupplungsarm (20) abdeckenden Deckel umfasst oder durch den anhand des Lagers (121) in die Nichtgebrauchsstellung (N) verstellten Kupplungsarm (20) realisiert ist.

## Claims

1. Trailer coupling for a motor vehicle (90), with a coupling arm (20) for coupling-on a trailer or a rear load carrier, which in a position of use (G) extends rearwards beyond the motor vehicle (90), wherein the coupling arm (20) is mounted, releasably attachable or with the aid of a bearing (121) between the position of use (G) and an inoperative position (N) shifted closer to the motor vehicle (90), on a vehicle mounting (50) which may be or is attached to the motor vehicle (90) with the aid of a plug connection which has a plug-in projection (21) and a plug-in socket (52), wherein the trailer coupling (10) has a fixing device (40) for fixing the coupling arm (20) to the vehicle mounting (50), in which interlocking contours (38, 58) provided on the vehicle mounting (50) and the coupling arm (20) next to the plug-in projection (21) and the plug-in socket (52) or next to the bearing (121) engage positively in one another, wherein there is provided on the coupling arm (20) a vehicle contact unit (70) with electrical connection contacts (71) for the electrical connection of an electrical trailer contact unit (95) of the trailer, which has at least one electrical connection cable (80) for connection to a vehicle electrical system (93) of the motor vehicle (90) wherein, on the interlocking contours (38, 58), electrical contact elements (100, 101, 150, 151) are provided which, in the position of use (G) of the coupling arm (20), are in electrical contact with one another and a vehicle electrical system section (81) provided for connection with the vehicle electrical system (93) and a contact unit section (82) of the electrical connection cable or cables (80) connected to the vehicle contact unit (70), **characterised in that** the vehicle contact unit (70) includes a serial data interface or a bus interface for communication with the vehicle electrical system (93) of the motor vehicle (90) or a control unit of the trailer coupling (10) via data lines or bus lines (77), wherein the data lines or bus lines (77) are parts of the connection cable or cables (80).

2. Trailer coupling according to claim 1, **characterised in that** the contact elements (100, 101, 150, 151) are arranged next to interlocking faces (31, 57) of the interlocking contours (38, 58) in contact with one another in the position of use (G), so that the contact elements (100, 101, 150, 151) are unstressed by the interlocking contact of the interlocking contours (38, 58).

3. Trailer coupling according to claim 1 or 2, **characterised in that** the interlocking contours (38, 58) include at least one slot-like, in particular V-shaped or U-shaped, interlocking location (54) and at least one interlocking projection (30) matching the former, wherein contact elements (100, 101, 150, 151) of the electrical contact elements (100, 101, 150, 151) interacting with one another are arranged opposite one another on a base (61) of the interlocking location or locations (54) and an apex area (33) or frontal area of the interlocking projection or projections (30).

4. Trailer coupling according to any of the preceding claims, **characterised in that** there is provided on the coupling arm (20) and/or the vehicle mounting (50) a plug-in mounting for attaching at least one of the contact elements (100, 101, 150, 151) and/or a contact unit mounting (25) for mounting the vehicle contact unit (70) and/or a cable channel (59) for accommodating at least one section of the connection cable or cables (80).

5. Trailer coupling according to claim 4, **characterised in that** the plug-in mounting and/or the contact unit mounting (25) and/or the cable channel (59) are integral with a base body of the coupling arm (20) or of the vehicle mounting (50), wherein the base body is preferably made of metal.

6. Trailer coupling according to any of the preceding claims, **characterised in that** the contact unit section (82) of the connection cable or cables (80) runs on an outer periphery of the coupling arm (20).

7. Trailer coupling according to any of the preceding claims, **characterised in that** it has at least two or exactly two pairs of interlocking contours (38, 58), arranged at an angular distance from one another, in particular of 180°, on which in each case a pair of interacting contact elements (100, 101, 150, 151) is provided.

8. Trailer coupling according to any of the preceding claims, **characterised in that** a control unit (75) is provided to control the connection contacts (71) of the vehicle contact unit (70), wherein the control unit (75) is or may be connected with the vehicle electrical system section (81) of the connection cable or cables (80), or forms part of the vehicle contact unit (70).

9. Trailer coupling according to any of the preceding claims, **characterised in that** the serial data interface or the bus interface for communication with the vehicle electrical system (93) of the motor vehicle (90) or the control unit of the trailer coupling (10) is provided with two data lines or bus lines (77), wherein the data lines or bus lines (77) are parts of the connection cable or cables (80).

10. Trailer coupling according to any of the preceding claims, **characterised in that** the connection cable or cables (80) includes or include a pair of electrical supply cables (78) and a pair of communication cables, in particular bus lines (77).

11. Trailer coupling according to any of the preceding claims, **characterised in that** the connection cable or cables (80) includes or include solely a pair of electrical supply cables (78) and a pair of communication cables, and/or that the number of contact faces electrically insulated from one another and connected with the contact unit section (82)of the connection cable or cables (80) is altogether 2 or 4.

12. Trailer coupling according to any of the preceding claims, **characterised in that** at least one contact element (100, 101, 150, 151) has a sprung electrical contact (102, 103, 152, 154), in particular a contact pin, and/or that at least one contact element (100, 101, 150, 151) has at least one electrical contact (102, 103, 152, 154) mounted on an electrically insulating holding body (104, 154).

13. Trailer coupling according to any of the preceding claims, **characterised in that** it is designed for redundant transmission of electrical energy and/or data, in particular control data or message data, redundant via pairings of contact elements (100, 101, 150, 151) separate from one another, in particular pairings of contact elements (100, 101, 150, 151) locally separate from one another.

14. Trailer coupling according to any of the preceding claims, **characterised in that** it has a cover of at least one electrical contact element (100, 101, 150, 151) located on the vehicle mounting (50), wherein the cover includes in particular a lid covering the plug-in socket (52) for the coupling arm (20) or is realised by the coupling arm (20) shifted into the inoperative position (N) with the aid of the bearing (121).

## Revendications

1. Attelage de remorque pour un véhicule automobile (90), avec un bras d'attelage (20) servant à accoupler une remorque ou un support de charges arrière, qui fait saillie, dans une position d'utilisation (G), du véhicule (90) vers l'arrière, dans lequel le bras d'attelage (20) peut être fixé de manière amovible au niveau d'une fixation de véhicule (50) pouvant être ou étant fixée au niveau du véhicule automobile (90) à l'aide d'une liaison d'enfichage présentant une partie faisant saillie d'enfichage (21) et un logement d'enfichage (52) ou est monté à l'aide d'un palier (121) entre la position d'utilisation (G) et une position de non-utilisation (N) ajustée davantage à proximité du véhicule automobile (90), dans lequel l'attelage de remorque (10) présente un dispositif de blocage (40) servant à bloquer le bras d'attelage (20) au niveau de la fixation de véhicule (50), où des contours à complémentarité de forme (38, 58) disposés au niveau de la fixation de véhicule (50) ou du bras d'attelage (20) à côté de la partie faisant saillie d'enfichage (21) et du logement d'enfichage (52) ou à côté du palier (121) s'imbriquent les uns dans les autres par complémentarité de forme, dans lequel est disposée, au niveau du bras d'attelage (20), une unité de contact de véhicule (70) électrique avec des contacts de raccordement (71) électrique servant au raccordement électrique d'une unité de contact de remorque (95) électrique, qui présente au moins une ligne de raccordement (80) électrique servant au raccordement à un réseau de bord (93) du véhicule automobile (90), dans lequel sont disposés, au niveau des contours à complémentarité de forme (38, 58), des éléments de contact (100, 101, 150, 151) électriques, qui sont en contact électrique les uns avec les autres dans la position d'utilisation (G) du bras d'attelage (20) et relient entre elles une section de réseau de bord (81) prévue pour être reliée au réseau de bord (93) et une section d'unité de contact (82), reliée à l'unité de contact de véhicule (70), de l'au moins une ligne de raccordement (80) électrique, **caractérisé en ce que** l'unité de contact de véhicule (70) comprend une interface de données en série ou une interface de bus servant à la communication avec le réseau de bord (93) du véhicule automobile (90) ou avec un appareil de commande de l'attelage de remorque (10) par l'intermédiaire de lignes de données ou de lignes de bus (77), dans lequel les lignes de données ou les lignes de bus (77) font partie intégrante de l'au moins une ligne de raccordement (80).

2. Attelage de remorque selon la revendication 1, **caractérisé en ce que** les éléments de contact (100, 101, 150, 151) sont disposés à côté de faces à complémentarité de forme (31, 57), en contact les unes avec les autres dans la position d'utilisation (G), des contours à complémentarité de forme (38, 58), de sorte que les éléments de contact (100, 101, 150, 151) ne sont pas soumis à une contrainte par le contact à complémentarité de forme des contours à complémentarité de forme (38, 58).

3. Attelage de remorque selon la revendication 1 ou 2, **caractérisé en ce que** les contours à complémentarité de forme (38, 58) comprennent au moins un logement à complémentarité de forme (54) en forme de rainure, en particulier en forme de V ou en forme de U, et au moins une partie faisant saillie à complémentarité de forme (30) adaptée à celui-ci, dans lequel des éléments de contact (100, 101, 150, 151) coopérant les uns avec les autres des éléments de contact (100, 101, 150, 151) électriques sont disposés au niveau d'un fond (61) de l'au moins un logement à complémentarité de forme (54) et de manière à faire face à une zone de sommet (33) ou une zone frontale de l'au moins une partie faisant saillie à complémentarité de forme (30).

4. Attelage de remorque selon l'une quelconque des revendications précédentes, **caractérisé en ce qu'**une fixation d'enfichage servant à installer par enfichage au moins un des éléments de contact (100, 101, 150, 151) et/ou une fixation d'unité de contact (25) servant à fixer l'unité de contact de véhicule (70) et/ou un canal de ligne (59) servant à loger au moins une section de l'au moins une ligne de raccordement (80) sont disposés au niveau du bras d'attelage (20) et/ou de la fixation de véhicule (50).

5. Attelage de remorque selon la revendication 4, **caractérisé en ce que** la fixation d'enfichage et/ou la fixation d'unité de contact (25) et/ou le canal de ligne (59) sont d'un seul tenant avec un corps de base du bras d'attelage (20) ou de la fixation de véhicule (50), dans lequel le corps de base est constitué de préférence de métal.

6. Attelage de remorque selon l'une quelconque des revendications précédentes, **caractérisé en ce que** la section d'unité de contact (82) de l'au moins une ligne de raccordement (80) s'étend au niveau d'une périphérie extérieure du bras d'attelage (20).

7. Attelage de remorque selon l'une quelconque des revendications précédentes, **caractérisé en ce qu'**il présente au moins deux ou précisément deux appariements de contours à complémentarité de forme (38, 58) disposés à une distance angulaire, en particulier de 180°, les uns par rapport aux autres, au niveau desquels est prévue respectivement au moins une paire d'éléments de contact (100, 101, 150, 151) coopérant.

8. Attelage de remorque selon l'une quelconque des revendications précédentes, **caractérisé en ce qu'**un appareil de commande (75) servant à piloter les contacts de raccordement (71) de l'unité de contact de véhicule (70) est prévu, dans lequel l'appareil de commande (75) est ou peut être relié à la section de réseau de bord (81) de l'au moins une ligne de raccordement (80) ou forme une partie intégrante de l'unité de contact de véhicule (70).

9. Attelage de remorque selon l'une quelconque des revendications précédentes, **caractérisé en ce que** l'interface de données en série ou l'interface de bus est prévue aux fins de la communication avec le réseau de bord (93) du véhicule automobile (90) ou l'appareil de commande de l'attelage de remorque (10) par l'intermédiaire de deux lignes de données ou lignes de bus (77), dans lequel les lignes de données ou les lignes de bus (77) font partie intégrante de l'au moins une ligne de raccordement (80).

10. Attelage de remorque selon l'une quelconque des revendications précédentes, **caractérisé en ce que** l'au moins une ligne de raccordement (80) comprend une paire de lignes d'alimentation (78) électriques et une paire de lignes de communication électriques, en particulier de lignes de bus (77).

11. Attelage de remorque selon l'une quelconque des revendications précédentes, **caractérisé en ce que** l'au moins une ligne de raccordement (80) comprend exclusivement une paire de lignes d'alimentation (78) électriques et une paire de lignes de communication électriques et/ou le nombre de faces de contact isolées électriquement les unes des autres et reliées à la section d'unité de contact (82) de l'au moins une ligne de raccordement (80) est au total de 2 ou de 4.

12. Attelage de remorque selon l'une quelconque des revendications précédentes, **caractérisé en ce qu'**au moins un élément de contact (100, 101, 150, 151) présente un contact (102, 103, 152, 154) électrique sur ressorts, en particulier une tige de contact, et/ou qu'au moins un élément de contact (100, 101, 150, 151) présente au moins un contact (102, 103, 152, 154) électrique disposé au niveau d'un corps de maintien (104, 154) électriquement isolant.

13. Attelage de remorque selon l'une quelconque des revendications précédentes, **caractérisé en ce qu'**il est configuré pour transmettre de manière redondante une énergie électrique et/ou des données, en particulier des données de commande ou des données de notification, de manière redondante par l'intermédiaire d'appariements séparés les uns des autres d'éléments de contact (100, 101, 150, 151), en particulier d'appariements éloignés les uns des autres localement d'éléments de contact (100, 101, 150, 151).

14. Attelage de remorque selon l'une quelconque des revendications précédentes, **caractérisé en ce qu'**il présente un recouvrement d'au moins un élément de contact (100, 101, 150, 151) électrique disposé au niveau de la fixation de véhicule (50), dans lequel le recouvrement comprend en particulier un couvercle recouvrant le logement d'enfichage (52) pour le bras d'attelage (20) ou est réalisé par le bras d'attelage (20) ajusté à l'aide du palier (121) dans la position de non-utilisation (N).
